# EUROPEAN PATENT APPLICATION

(11) **EP 2 246 686 A1**
(43) Date of publication of application: **03.11.2010**
(21) Application number: 09251248.2
(22) Date of filing: 01.05.2009
(51) Int. Cl.: G01M 17/007, G05B 17/00, G05D 1/00, G09B 9/00

(54) **Vehicle test apparatus and method**

(71) Applicant: Froude Hofmann Limited, Blackpole Road Worcester WR3 8YB (GB)
(72) Inventor: Sharpe, Stephen, Worcester, WR3 8YB (GB); Deakin, Gareth, Worcester, WR3 8YB (GB); Hollingworth, Mark, Worcester, WR3 8YB (GB)
(74) Representative: Franks, Robert Benjamin

(57) **Abstract**

A vehicle test cell apparatus and method for testing a vehicle, a subassembly or a component, operates a test session in response to a set of computer generated control instructions. The control instructions are generated from separate independent data sets of route data describing a physical point to point test drive route, a driver control data representing control inputs of at least one individual driver for controlling the vehicle, and a traffic data representing a traffic condition on the test route. The route data, driver control data and traffic data are fully independent data sets, allowing substitution of different route, different driver profiles and different traffic profiles. The route data is collected by a data sequencer during a test drive of a real route.

## Description

### Field of the Invention

The present invention relates to a method and apparatus for testing a vehicle, a sub-assembly of a vehicle, or a vehicle component.

### Background to the Invention

Modern vehicles such as cars, buses, trucks, aircraft, boats, ships and the like are expected to be able to operate in a range of geographical regions, ranging from hot tropical regions to cold sub-zero temperature regions.

Road vehicles must operate across a range of road surface types, and a range of vehicle loading conditions, and under operation from a wide range of different drivers, who may have different driving styles. Each country makes its own particular demands on a road vehicle, for example some countries have a large proportion of fast high speed well metalled roads, whilst other countries have slow rough roads, perhaps characterised by potholes, speed bumps and the like. Similarly, some countries are at sea level whilst other countries have high altitude mountainous passes. Different levels of humidity and temperature ranges can be expected from country to country.

All components of a vehicle are expected to work reliably over the lifetime of the vehicle, in a range of operating conditions and driven by a range of persons.

Currently it is known to road test pre-production vehicle prototypes in real driving conditions on pre-determined routes under control of different test drivers. Data is collected from a plurality of sensors on board the vehicle, which monitor a range of different parameters of the vehicle, sub-assemblies of the vehicle and/or individual components.

However, road testing or flight testing is time consuming and expensive, and increases the time to market for introduction of a new vehicle, sub-assembly or component in to the market place. Therefore, to avoid or reduce the need for extended environmental testing, it is known to test components in a laboratory using an automated test rig which simulates an environmental test such as a road test or a flight test.

Typically, a vehicle or a sub-assembly of a vehicle such as an engine, gearbox, suspension unit or the like, or an individual component, such as an exhaust coupler, suspension mount, shock absorber or the like is mounted within a test rig. The component is operated under simulated environmental conditions by applying, depending upon the vehicle, sub-assembly or component being tested, different levels of vibration, shock, temperature, acceleration, de-acceleration, torque, or humidity, using actuators, electric motors and/or dynamometers. For active components such as engines, tests are conducted operating over various ranges of revolutions per minute (rpm), vibration levels, temperatures and loadings.

In order to drive the actuators, motors and dynamometers to apply forces to the components, and sub-assemblies within the test rig, real test driver data is collected from pre-determined routes for a range of different individual human drivers. Data is collected on brake pedal usage, gear changes, clutch pedal and handbrake usage and throttle usage by driving a vehicle over a test route.

However, current simulation techniques are limited by the variety of environmental test data collected. Typically, data collection techniques are limited by available time and costs, which can lead to environmental data being collected which is not fully representative of all real conditions under which a vehicle, sub-assembly or component may be expected to operate. For example in road testing of automobiles or trucks, often the same human test driver is used, on a pre-determined point to point route, but with instructions to drive the route differently, to simulate for example an aggressive driver, or a cautious slow driver.

Such data collection has its short comings since it is difficult for a single test driver to accurately simulate a wide variety different driving techniques or habits, such as leaving the foot on the clutch pedal, holding the car on the clutch on a hill, riding the brake pedal excessively, under or over rewing the engine, operating the car in too a high or too a lower gear for the driving conditions, or driving off with the hand brake on.

Further, the simulated routes between geographical locations A to B are limited by the practicalities of repeatedly driving those routes.

The overall result is that the collected environmental test data comprises a set of individual environmental tests, each of which is specific to a particular route driven by a particular driver, and under a particular set of traffic conditions. These data sets are individual instances of a much wider data space in which there are millions of different possible combinations of route, driver, traffic conditions, and weather for a particular vehicle type.

Further, even for the same route, in order to obtain a different combination of driving style and/or traffic conditions, it is necessary to send a driver out to repeat running the route.

Using prior art simulation tests, although these are realistic for certain instances of route, driver, traffic and weather conditions, the range of real combinations of route, driver, traffic and weather conditions experienced by the vehicle, sub-assembly or component in the market place is much wider, with a result that there are some operating conditions which the vehicle, sub-assembly or component will experience when placed on the market, for which it has not been pre-tested, and under which the vehicle, sub-assembly or component can give inferior performance or have poor reliability.

At worst, this can result in safety or reliability issues with a vehicle which has already gone to market, and which necessitates an expensive vehicle re-call and modification.

### Summary of the Invention

Specific apparatus and methods, disclosed herein aim to provide an improved simulation testing apparatus and method for a vehicle, sub-assembly or a component of a vehicle.

A further object of the specific embodiments and methods described herein is to provide test engineers with a wider range of independently variable test parameters for driving a simulation test apparatus for a vehicle, sub-assembly or vehicle component.

A further object of the specific embodiments and methods herein is to allow test engineers to have a higher degree of control over individually variable test parameters for simulation tests than has previously been possible. In particular, independently variable route data, driver data and traffic data.

An advantage may be to allow test engineers to focus on and isolate particular test parameters for a simulation test rig in order to better characterise and diagnose the performance of individual vehicles, sub-assemblies or components thereof than has been previously possible under laboratory test conditions.

A benefit of the specific embodiments and methods disclosed herein may be to improve the overall test simulation process of a vehicle, sub-assembly or component by testing over a wider range of test parameters and thereby improve the performance including reliability and safety performance as well as efficiently, of vehicles, sub assemblies and components of vehicles.

In the specific embodiments and methods disclosed, a test cell apparatus conducts a simulated environmental test of a vehicle, vehicle sub assembly or a vehicle component over a simulated route which the vehicle travels. A library of route data may be collected in advance from travelling individual routes and using a data sequencer to log features of the route, including geographical position and altitude, and event features of the route such as stop positions, start positions, turns, changes in altitude, and in the case of road vehicles, items of road furniture. The collected route data is independent of vehicle, driver or traffic conditions. The route data is then post processed to remove spurious outlier points, and is combined with driver data which can be either pre-stored behavior data of a real driver, or synthesised driver data the route data is also combined with traffic data, describing other events due to the presence or absence of other vehicles in the vicinity of the vehicle being tested, to a generate a speed - time - gradient (or elevation) data representing the way in which a driver will drive a vehicle along a specific route under specific traffic conditions. The speed - time - gradient data is then used to control a vehicle, sub assembly or component on a test rig or test cell to simulate an actual route test, but under laboratory conditions, without the need for an actual driver to drive the vehicle on the route.

Because the route data is independent of the driver data and traffic data, it can be re used in successive tests with different combinations of driver behaviour, or traffic conditions to obtain a whole range of different journey simulations, allowing vehicles to be tested over a much wider range of conditions for the same route, and for different routes, and avoiding the need for multiple test drivers to repeatedly make test drives over the same route. Once a route data has been collected, there is no need to repeat the data route collection process unless there are changes to the route (e.g. a new junction or route section). Consequently, the testing stage of a vehicle, sub assembly or component can be accelerated by round the clock testing, and/ or parallel testing over a wider range of simulated driving conditions over a set of test routes, leading to more reliable and/ or better engineered vehicles, sub assemblies and components being brought to market in reduced time scales, and at reduced development cost.

The control data generated from the route data, driver control data and traffic data may provide a user variable repeatable reliable test simulation for a vehicle, sub assembly or component.

According to a first aspect there is provided an apparatus for testing a vehicle, a vehicle sub-assembly or a vehicle component, said apparatus comprising:
a test cell apparatus configured for testing said motor vehicle, sub-assembly or component, said test cell apparatus operable for running a test session in response to a set of computer generated control instructions;
a computer apparatus configured for controlling said test cell apparatus;
   wherein said control instructions are generated from separate independent data sets comprising;
   (a) route data representing at least one physical route between a plurality of geographical destinations; and
   (b) driver control data representing control inputs of at least one individual driver for controlling said vehicle, vehicle sub assembly or vehicle component.

According to a further aspect there is provided a data sequencer for collecting route data for a vehicle test, said data sequencer comprising:
a data processor;
a user interface for allowing a user to enter data describing a physical route;
a location detecting component for detecting a geographical location of said data logger, wherein said data sequencer is operable for;
traversing a geographical route in real time;
collecting position data at predetermined intervals in real time; and
collecting road furniture data describing items of road furniture, substantially in real time.

The data sequencer is preferably capable of collecting said traffic route data selected from the set: traffic flow rules; speed limits; give-way rules; left turns; right turns; traffic lights; bus stops; level crossings; give-way signs; speed cameras; single carriageways; dual carriageways; multiple carriageway lanes.

The data sequencer is preferably further operable for processing said collected position data and time data to determine speed data corresponding to said route.

The data sequencer is preferably further capable of removing outlier data being data which falls outside a range of normally expected route.

According to a further aspect, the there is provided a method of collecting route data in real time, said method comprising;
traversing a geographical route in real time;
collecting position data at predetermined intervals in real time; and
collecting road furniture data describing items of road furniture, substantially in real time.

Preferably, said method further comprises processing said collected position data and time data to determine speed data corresponding to said route.

Preferably, said method comprises removing outlier data being data which falls outside a range of normally expected route data.

The traffic data may comprise rules and/or events selected from the set: traffic flow rules; speed limits; give-way rules; left turns; right turns; traffic lights; bus stops; level crossings; give-way signs; speed cameras; single carriageways; dual carriageways; multiple carriageway lanes.

Other aspects are as recited in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 herein illustrates schematically a chassis test cell apparatus according to a first specific embodiment, configured to test a vehicle, sub-assembly or component of a vehicle;
Figure 2 herein illustrates schematically individual dynamometers, actuators and control systems of the chassis test cell of figure 1;
Figure 3 herein illustrates schematically a driver simulation robot for actuating the accelerator, brake and clutch controls and gear selector lever of a road vehicle, as used in the chassis test cell of figure 1 herein;
Figure 4 herein illustrates schematically a process and apparatus for logical control of a vehicle under test in the chassis test cell of figure 1 herein;
Figure 5 herein illustrates schematically an external view of a power train test cell according to a second specific embodiment, for testing a vehicle power train;
Figure 6 herein illustrates schematically components of the power train test cell of figure 5 herein;
Figure 7 herein illustrates schematically a perspective view of an engine test cell for testing an engine according to a third specific embodiment;
Figure 8 herein illustrates schematically components of the engine test cell of figure 7 herein;
Figure 9 herein illustrates schematically logical control components of the engine test cell of figures 7 and 8 herein;
Figure 10 herein illustrates schematically an overall process for running a simulation test using any one of the test rigs of figure 1 to 9 herein;
Figure 11 herein illustrates schematically processes for creating a speed-time-elevation data file for running a simulation test as described with reference to figure 10 herein;
Figure 12 herein illustrates schematically a three-dimensional data space representing a plurality of speed, time and elevation data sets available through a prior art method of real time data collection resulting from individual test drives;
Figure 13 herein illustrates schematically a three-dimensional data space representing a plurality of individual data files having different combinations of route, driver style and traffic conditions as generated by the novel processes and apparatus disclosed herein;
Figure 14 herein illustrates schematically components of a data logger apparatus according to a fourth specific embodiment disclosed herein;
Figure 15 herein illustrates schematically a data logging process for collecting route data using the data logger of figure 14 herein;
Figure 16 herein illustrates schematically in overview, a route data collection process for creating a route data set using the data logger of figure 14 herein;
Figure 17 herein illustrates schematically a user interface of the data logger of figure 14 herein;
Figure 18 herein illustrates schematically a data structure of a data set collected by the data logger of figure 14 herein according to the processes disclosed with reference to figures 15 and 16 herein;
Figure 19 herein illustrates schematically part of a sample data set of a route data file collected by the data logger of figure 14 using the process of figure 15 herein;
Figure 20 herein illustrates schematically a set up menu of the data logger of figure 14 herein;
Figure 21 herein illustrates schematically a set up screen for entering speed limit data of the data logger of figure 14 herein;
Figure 22 herein illustrates schematically user interface for monitoring the number of satellites from which the data logger is receiving information;
Figure 23 herein illustrates schematically a user interface for post-processing of data collected by the data logger by removal of outlier data;
Figure 24 herein illustrates schematically a first user interface for setting up a driver profile for a simulation test;
Figure 25 herein illustrates schematically a second user interface for setting an individual driver profile data for a simulation test;
Figure 26 herein illustrates schematically a user interface for setting global driver parameters which are apply to a plurality of simulated drivers in a test simulation;
Figure 27 herein illustrates schematically a user interface for setting up a traffic condition for an individual driver for a simulation test using a test cell as described herein before;
Figure 28 herein illustrates schematically a user interface display produced during a simulated test using a test cell as described herein before, displaying aspects of vehicle operation and position within a route during a simulated test; and
Figure 29 herein illustrates schematically a map visual display which can be displayed during a simulation test run on a test cell as described in figures 1 to 9 herein.

### Detailed Description

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

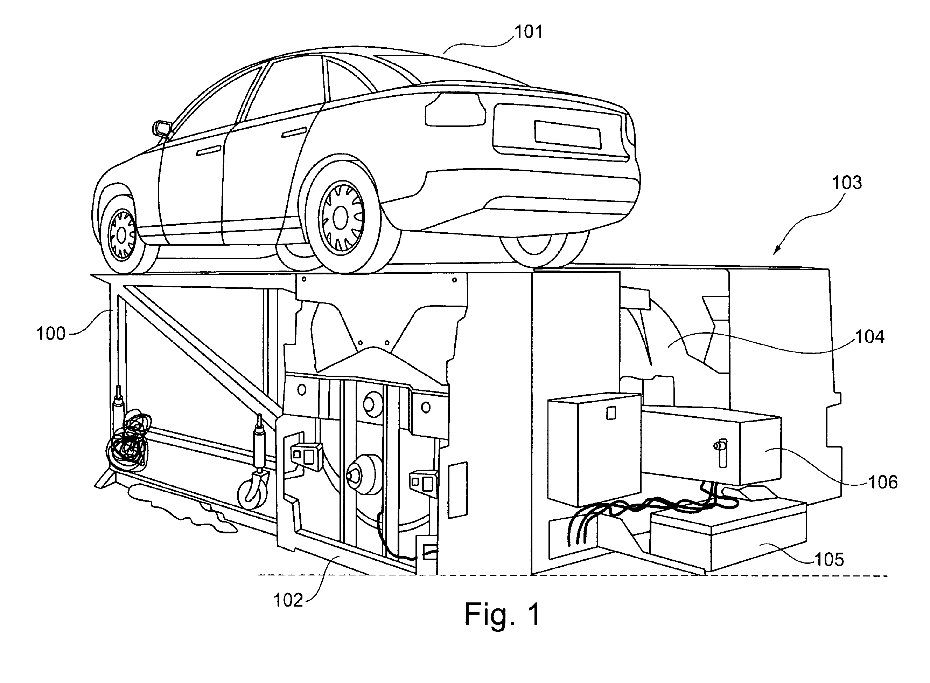

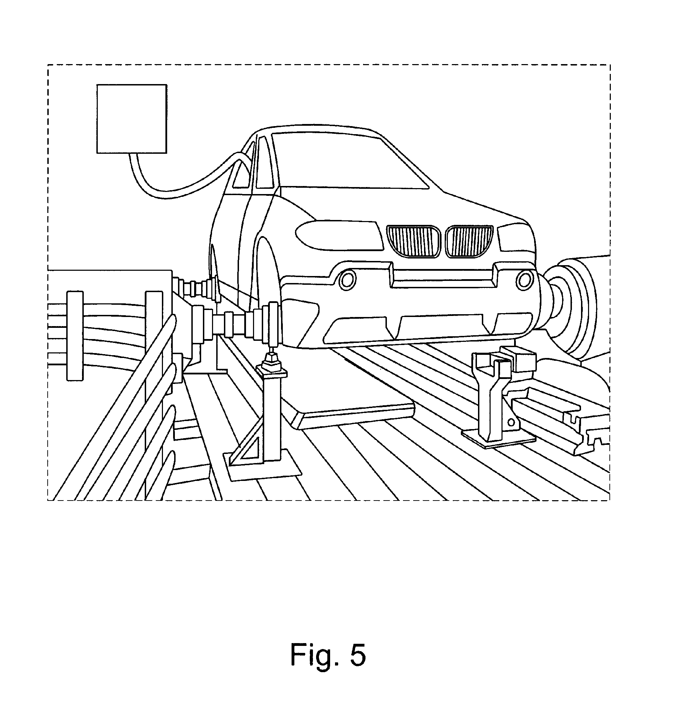

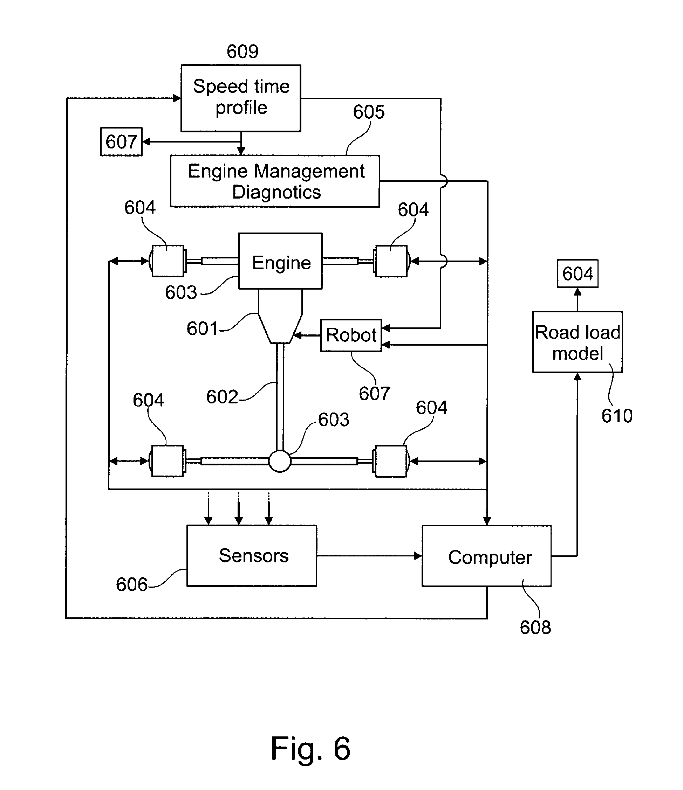

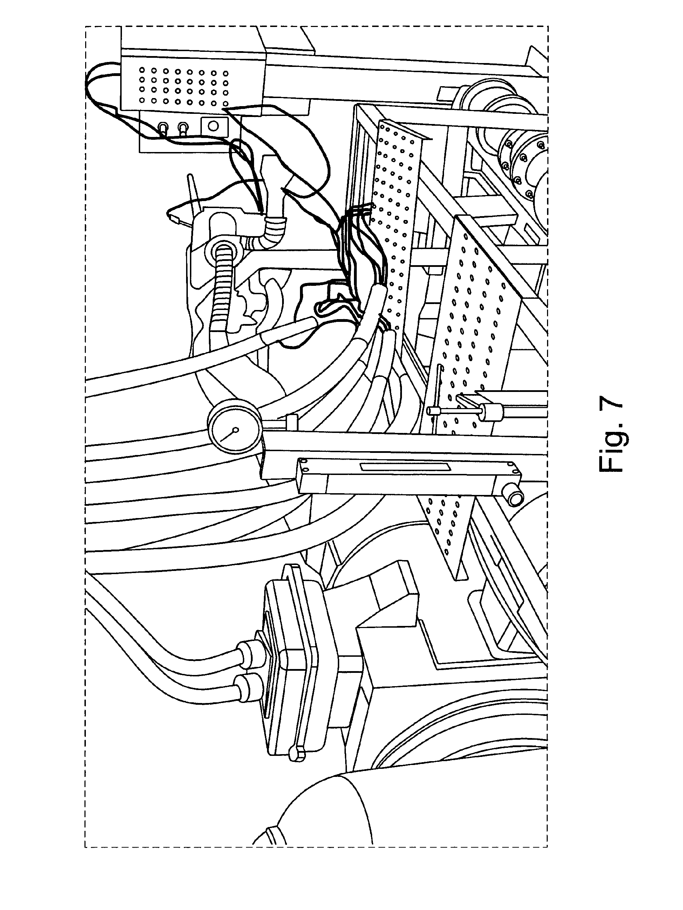

For automotive vehicles, a test simulation may take place for testing aspects of the whole vehicle, sub-assemblies or components thereof. Three main test rig types include:
- A chassis dynamometer test rig, as shown in figures 1 to 4 herein;
- A power train test rig, as shown in figures 5 and 6 herein; and
- An engine test rig, as shown in figures 7 to 9 herein.

In a chassis test cell, a complete vehicle, or vehicle chassis is driven on to a set of rollers which contact the road wheels of the vehicle. For 2-wheel drive vehicles, a single set of rollers and a single dynamometer are used, and for a 4-wheel drive vehicle, two sets of rollers and two dynamometers are used, where the two sets of rollers are mounted rigidly spaced apart by a metal frame.

In a power train test cell, an assembly comprising an engine, a gearbox (automatic or manual), one or more differentials and optionally a 4-wheel drive system are connected to dynamometer, with the differential(s) being connected to one or more dynamometers.

An engine test cell is aimed at testing performance of an engine of a vehicle. A fly wheel of the engine is connected directly to a dynamometer loading device via a rotating shaft, and measurements of power, torque, fuel emissions, cooling, fuel consumption and the like are logged on to a data logger.

In general, automotive test cells need to be four quadrant, which means that not only can power from the engine be absorbed, but also power can be put back in to the engine via a power train or via a simulated power train, in order to simulate overloads, such as deceleration of a vehicle, and engine braking. Within a test cell there is generally provided all of the peripheral equipment necessary to support the engine and the power train, including a fuel tank, ventilation for exhaust gases, a coolant system, air temperature controllers for controlling inlet air temperature, fuel measurement equipment, water temperature control, equipment for measuring the emissions from an exhaust pipe. Additionally, there is a control system for controlling the above equipment and for controlling the dynamometer, the throttle, the water temperature control, the fuel temperature controller, and also including measurement equipment for measuring all of the instrumentation and sensors attached to the engine, including water temperature, water pressure, air inlet temperature, exhaust gas temperature, inlet and outlet pressures, throttle positions, RPM, and the emissions coming out of the engine, and in the case of diesel engines, the amount of particulates emitted.

All of the measured sensor parameters are input in to a data logger, and the whole test is run under control of a computer system. The computer system can run automated test cycles. The automated cycles are programmed by a user, and the user can specify that the engine either follows a predetermined speed - time profile, or to follow a set of steady state stages.

Referring to figure 1 herein, there is illustrated schematically one example of chassis dynamometer for testing a complete vehicle or vehicle chassis. The chassis test bed comprises a platform 100 upon which a vehicle 101 is placed; first and second rotating drums 102, 103 respectively, the drums being driven by an electric motor 104; a plurality of wheel location guides, which are extendable and retractable, and which can be placed fore and aft of the vehicle's wheels for holding the vehicle on the rotating drums; a data logger 105 for logging data during a test; and a control computer 106 for controlling a test session of a vehicle; and a plurality of transducers and sensors, which measure parameter such as rate of rotation of drums, engine parameters such as engine speed, air temperature, fuel temperature, fuel flow rate, fuel mixture, manifold gas inflow and outflow rates, gear box measurement parameter such as clutch speed, selected gear ratio, propeller shaft speed, gearbox oil temperature, casing temperature and various drive train transducers including for example stress and strain monitors, vibration monitors, revolution speed monitors, temperature sensors, audio frequency sensors and the like.

During a simulation road test, the vehicle is "driven" by a computer controlled robot driver comprising a set of actuators and levers.

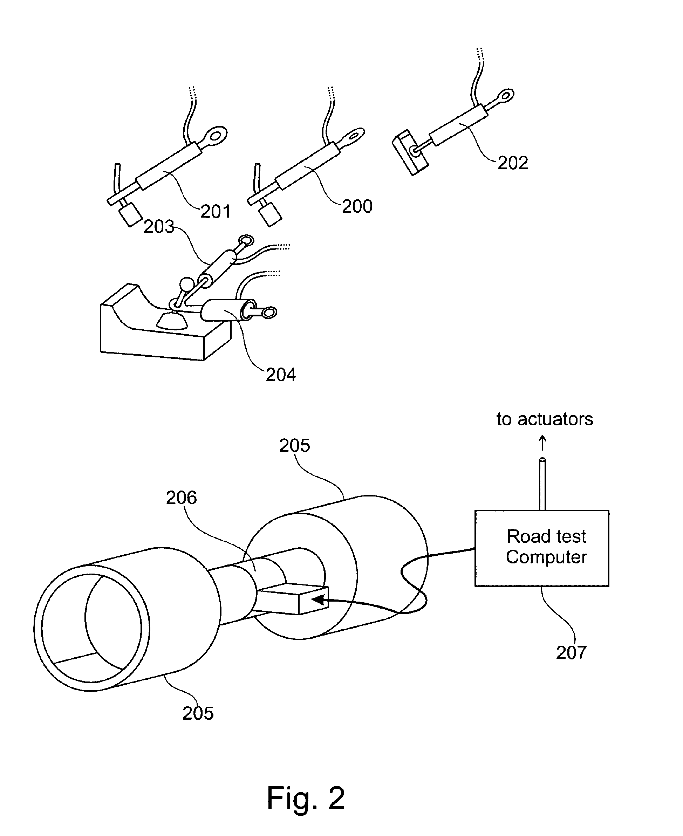

Referring to figure 2 herein, there is illustrated schematically components of the vehicle test cell of figure 1. The robot actuators comprise a brake pedal actuator 200, which can be electrically or hydraulically controlled, and which depresses and releases the vehicle brake pedal; a vehicle clutch pedal actuator 201, which can either be hydraulically or electrically controlled, and which depresses and releases the vehicle's clutch pedal; an accelerator pedal actuator 202, which depresses and releases the accelerator and is capable of being continuously varied in its position; one or a plurality of gear lever actuators 203, 204 capable of moving the gear lever in to a set of gear selection positions, for either a manual or automatic transmission vehicle; and a set of rolling road wheels 205, which are driven by one or more dynamometers 206, wherein the dynamometer(s) can impose a positive or negative load on the road wheels of a vehicle so as to simulate resistance to acceleration of the vehicle, or to transfer load from the rolling road wheels to the wheels of the vehicle to simulate a braking force. A computer 207 controls the dynamometer and actuators.

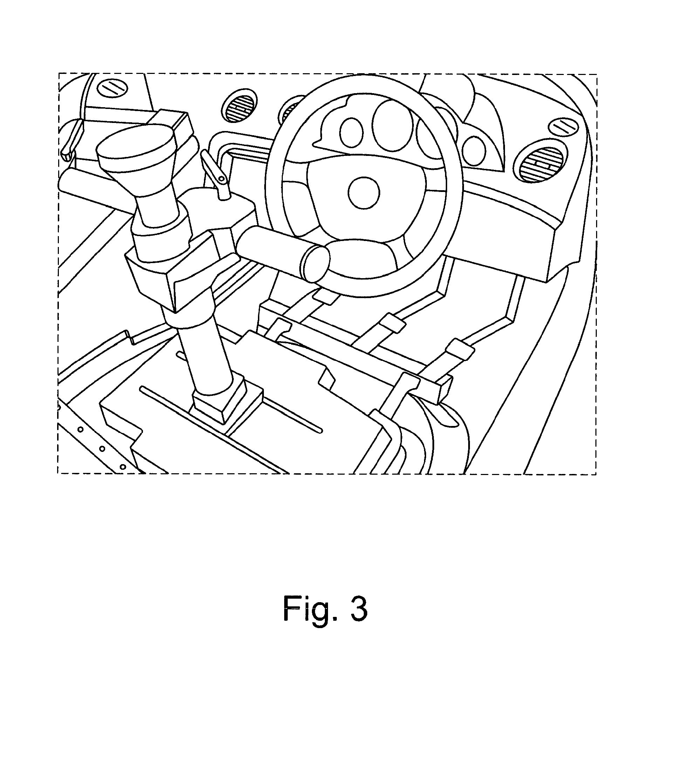

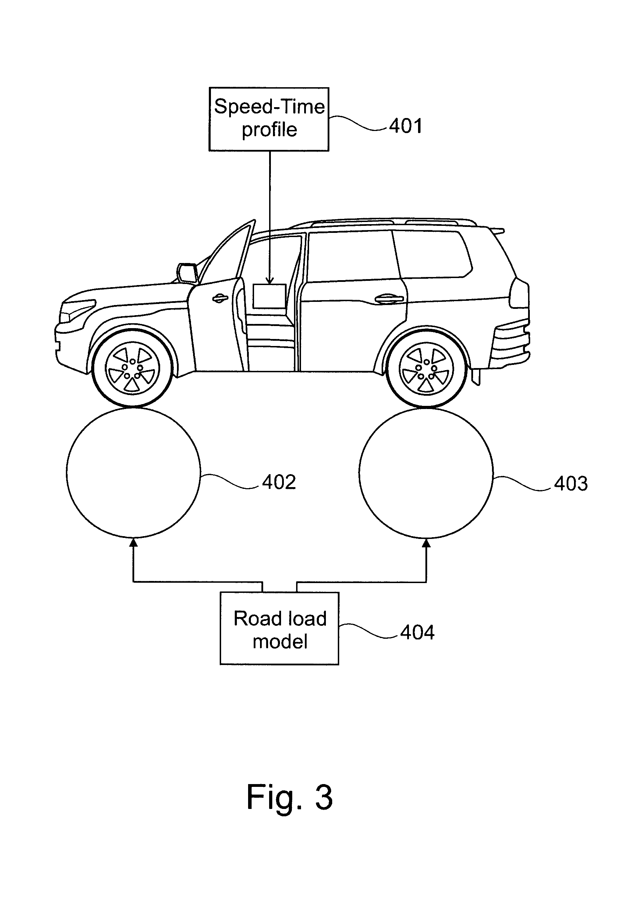

Referring to figure 3 herein, there is illustrated schematically a computer controllable robot comprising part of a test apparatus, for automatically controlling the vehicle's controls, such as accelerator pedal, brake pedal, clutch pedal, gear change lever or automatic transmission change lever, handbrake and the like. The robot comprises a plurality of electro-mechanical actuators which can be controlled in response to computer generated control signals from the test simulation computer.

Referring to 4 herein there is shown schematically a vehicle under dynamic test in a chassis test cell. Under a simulated road test, the robot 400 which controls the vehicle's driver controls is driven according to a speed-time profile 401, implemented through the road test computer and hydraulic controls as described with reference to figure 2, which simulates a person driving a vehicle over a particular geographical route. The speed time profile controls the robot actuators to change gear, steer the car, brake, accelerate and operate the clutch as would a human driver under conditions of a real road test.

The dynamometer wheels 402, 403 are driven according to a road load model 404, implemented through the road test computer and dynamometer wheel controls as described in reference to figure 2 herein, and which simulates the loads placed on the road wheels as would occur under real driving conditions as simulated by the road tests. The loads applied by the road load model are consistent with and match the operation of the vehicle by a simulated driver in accordance with the speed time profile. For example as the car decelerates quickly, relatively high loading is transmitted from the dynamometer wheels to the road wheels, as when the vehicle brakes the dynamometer wheels give resistance to the road wheels, and conversely as the vehicle accelerates, the dynamometer wheels behave with high torque, to simulate the resistance of the road wheels on the tarmac in order to propel the vehicle forward.

Referring to figure 5 herein, there is illustrated schematically in perspective view a power train test cell for testing a power train comprising an engine, a gearbox, and one or more differentials of a vehicle.

Referring to figure 6 herein, there is illustrated schematically components of the power train test cell as shown in figure 5 herein. The system on test typically comprises an engine 600 a gearbox 601, one or more propeller shafts 602, one or more differentials 603, comprising the power train components of a vehicle to be tested. The power train test cell comprises one or a plurality of dynamometers 604, each independently monitored and each independently controllable; an engine management and diagnostics system 605, comprising a support system for the engine such as a fuel tank, fuel pump, cooling system, and the like; a plurality of sensors 606 for measuring engine parameters, transmission parameters, and dynamometer parameters; a robot gear changer 607 for applying gear shifts to the transmission; and a control computer 608 for controlling the whole power train test cell and collecting data concerning engine performance and power train performance during a simulation test. The computer system 608 can run a set of simulations in accordance with a speed-time profile 609 which controls the engine management and support system 605, and the robot gear changer 607. The one or plurality of dynamometers 604 are controlled according to a road load model 610 which simulates the loading on the engine and the power train by the road as the vehicle accelerates or decelerates.

Referring to figure 7 herein, there is illustrated schematically in perspective view an engine test cell. Typically the test cell is enclosed within a room or chamber which contains all of the ancillary support systems and measurement systems for testing the engine.

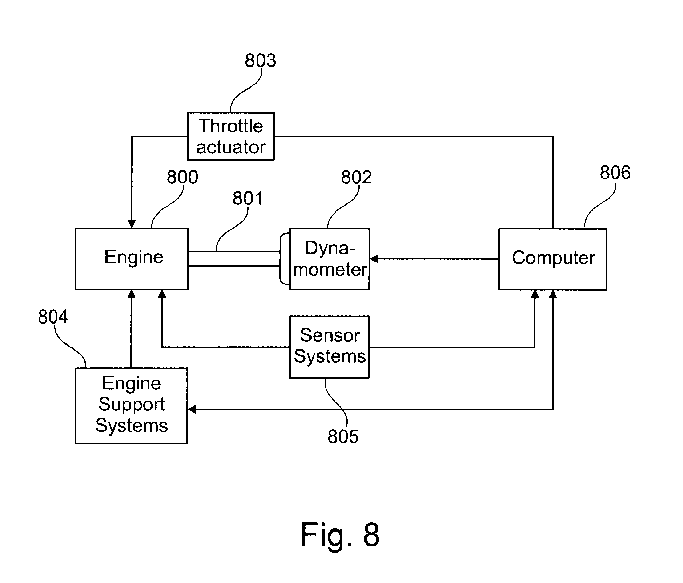

Referring to figure 8 herein, there is illustrated schematically components of the engine test cell of figure 7. The engine test cell comprises a frame work for mounting an engine 800, a drive shaft 801 connecting the engine to a dynamometer 802; a throttle actuator for operating the engine controls; an engine support system 804 for providing fuel, cooling and exhaust gas disposal; a set of sensors 805 for measuring engine parameters, and a control computer 806, controlling the dynamometer and throttle actuator.

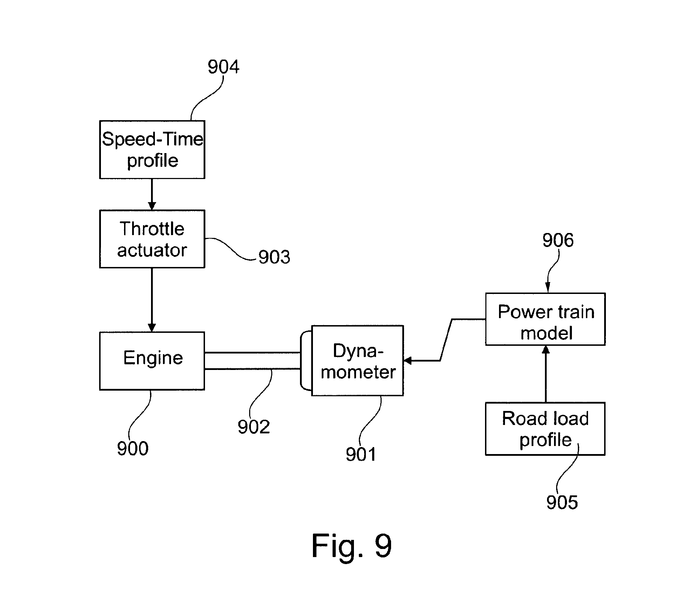

Referring to figure 9 herein, there is illustrated schematically control of the engine test cell of figures 7 and 8 herein. Engine 900 is connected directly to a dynamometer 901 via a power shaft 902. The engine is controlled by an actuator 903, which operates the throttle, ignition and other controls. The actuator 903 controls the engine in accordance with a predetermined speed time profile 904 which represents a simulated road test under real driving conditions. The speed time profile is implemented by means of a software simulation run by the control computer. At the same time, the computer controls the dynamometer 901 in accordance with a road load profile 905 which simulates the loading of the engine due to road conditions, for example deceleration and braking. Since the gearbox and power train is not present, the behavior of the gearbox and power train is represented by a power train model 906, which models the behavior of the power train when operating according to the road load profile 905. The output of the road load model and the power train model are a set of instructions to control the dynamometer 901 to either absorb power from the engine, or to supply power to the engine in accordance with a simulated test route.

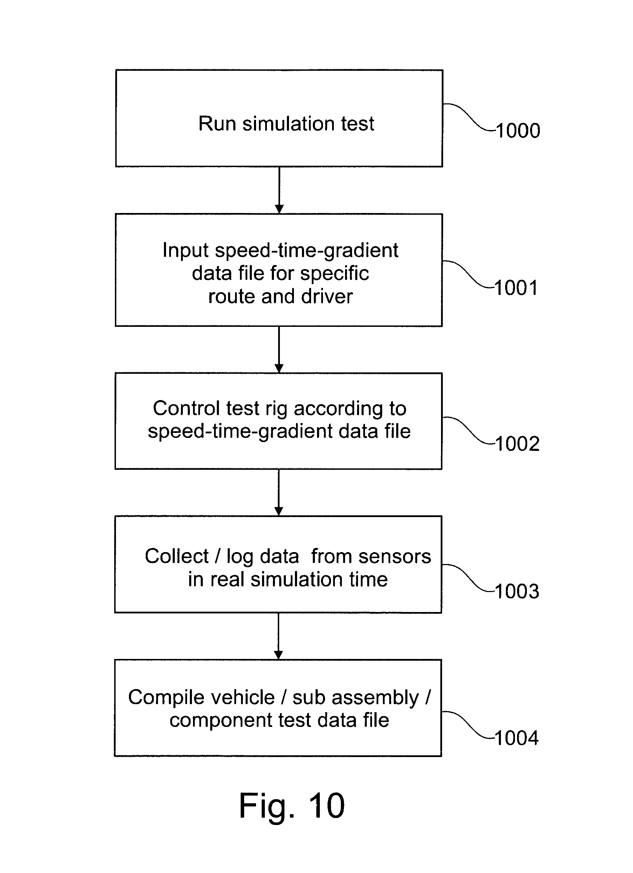

Referring to figure 10 herein, there is illustrated schematically a process for running a simulation test in either a chassis test cell, a power train test cell or an engine test cell described with reference to figures 1 to 9 herein. Running a simulation test is commenced in process 1000. In process 1001, the test cell computer inputs a post-processed speed-time-gradient data file for a specific route, driver, and traffic conditions, being the result of the set of procedure described later in this document. In process 1002 the test rig computer controls the actuators, dynamometers and robots, as appropriate, of the test rig to run a simulation of a vehicle along a test route and according to a particular driver profile and traffic condition as embedded in the speed-time-gradient data file. During the simulation drive, in process 1003 the data is continuously collected in real time from the plurality of sensors fixed around the vehicle, sub-assembly or component and is logged in real time in a data logger for later analysis, and is compiled in to a test data file in process 1004. The test data file records a wide range of parameters of operation of the vehicle, sub-assembly or component during a simulated test drive, where the test drive simulation conducted is according to a particular route, driver profile and set of traffic conditions.

The speed - time - gradient data is generated from separate independent sets of route data, driver control data and traffic data. The route data is collected from real test drives along real physical routes in the best mode, but in an adaptation of the best mode route data for artificial routes could be created. The driver control data may be generated from data collected as vehicle control operation data of real drivers operating vehicle controls, and then modified in a post processing operation by varying the actual driver control characteristics within a preset % range of variations. The traffic data represents a plurality of other vehicles which are on a same route as a vehicle under test, and the presence and behaviour of which affects the vehicle being tested and which are constraints on the operation of the vehicle being tested.

The route data, driver control data and traffic data are each independent data sets, each of which may be independently substituted for by other corresponding respective to generate a wide range of speed time gradient data sets, for conducting a corresponding wide variety of individual vehicle tests with different drivers and different traffic conditions for the same route, different routes and traffic conditions for the same driver, and different routes and drivers for the same traffic conditions.

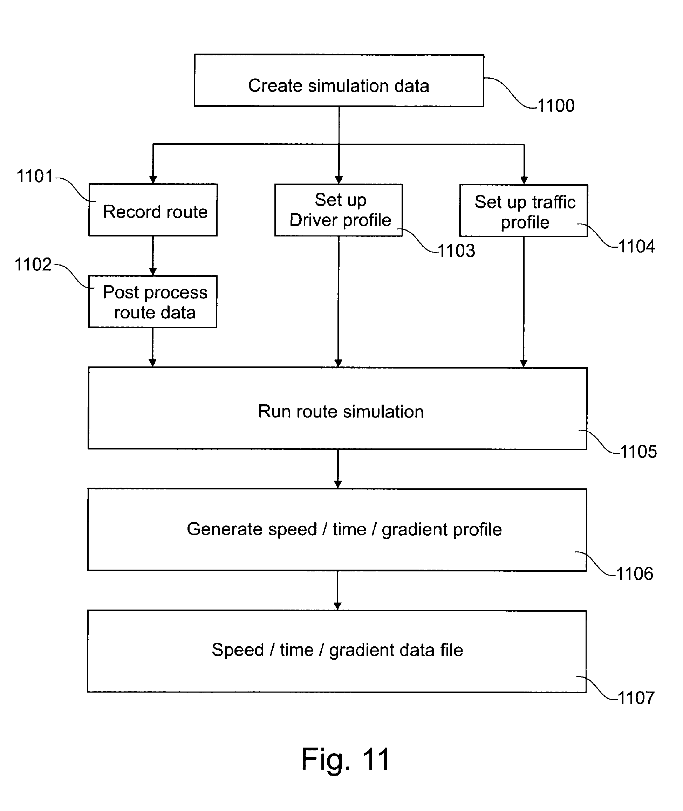

Referring to figure 11 herein, there is illustrated schematically processes carried out by a route data logger, and a post-processor for creating a speed-time-elevation (gradient) data file which can be used to control a test rig during a simulation test drive as described with reference to figure 10 herein. Creation of simulation data in process 1100 involves recording a route data in process 1101, by a driver and passenger driving a particular route using a vehicle equipped with a data logger as described herein after, and in real time collecting data describing aspects of the route driven; post-processing the route data in process 1102, removes outlier data or data which is inconsistent with the route, in other words a "data clean up" of the route data; setting up a driver profile in process 1103, which specifies a particular driver, independent of the recorded route, whose behavior is represented in a data file of driver behavior (a driver profile file); a process 1104 for setting up a traffic profile, which may be independent of the route data and independent of the individual driver profile data of process 1103; combining the post-processed route data, the individual driver profile, and the traffic profile 1104 in a simulated drive 1105 of a route, by the synthetically created driver represented by the driver profile obtained in process 1103 on the physical route, data for which has been recorded and post-processed in processes 1101 and 1102 respectively, and under a particular set of synthesised traffic conditions as described by the result of process 1104.

The result of the route simulation processing in process 1105 is to create a speed-time-elevation profile in 1106. This speed-time-elevation profile describes the behavior of a hypothetical synthesised driver driving the route under a particular set of traffic conditions described by the traffic profile result of process 1104. The profile is stored as a speed-time-gradient data file 1107.

Since the driver profile 1103 is independently user variable and the traffic profile 1104 is independently user variable over a wide range of parameters, a wide gamut of different speed-time-elevation data files can be generated for a particular actual route, without the need for different drivers to drive that route under varying different traffic conditions.

This has several practical advantages. Firstly it avoids the need for extensive road tests by a large number of different drivers under a large number of different traffic conditions. Secondly, in reality some of the traffic conditions which need to be tested may never or rarely occur on that particular route, for example that particular route may rarely or never experience severe congestion, this occurring once every few years where road works or vehicle accidents are present, or when particularly high or low volumes of traffic are present. Therefore the process permits synthetically creating a set of model speed-time-elevation files for that particular route which allow a much wider variation of driver styles and conditions than may actually occur in real life on that particular route. Thirdly, recording the route can be done in any vehicle, and not necessarily the prototype vehicle being tested. This means that the route recording can be done in a local hire car for example, and avoids the need to transport the test vehicle to the test route, which may be anywhere in the world, and then bring back the vehicle to the test cell.

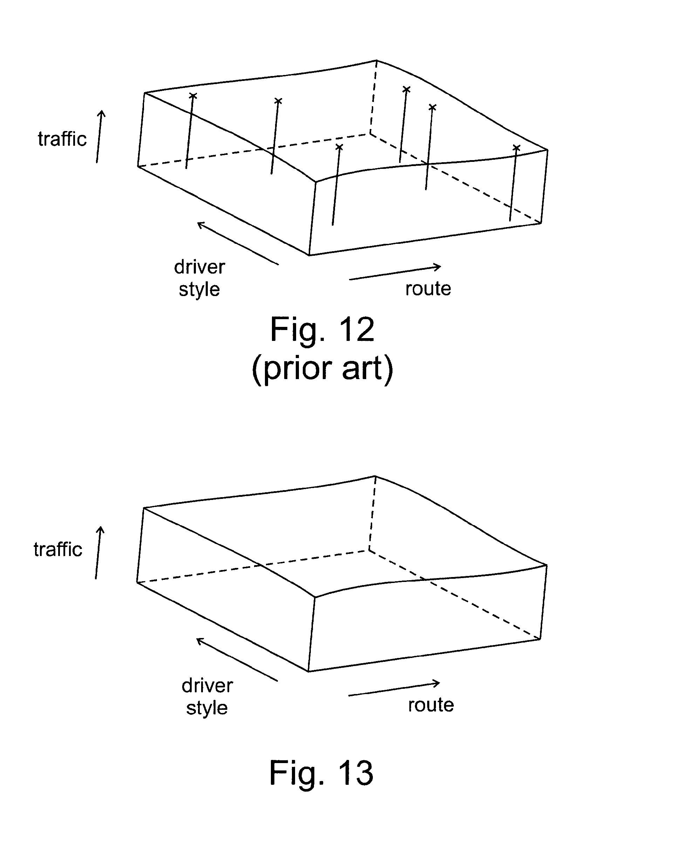

Referring to figure 12 herein, there is illustrated schematically a 3 dimensional data space of individual speed-time-elevation profiles having different routes, driver styles and traffic conditions collected according to prior art methods. Using the prior art data collection techniques, where an individual driver goes out on a particular route under particular traffic conditions, the 3 dimensional data space is populated with a number of individual discrete data points as shown, each one representing a particular real life test drive. Because there are practical limitations of cost and available time on how many individual test drives can be made, and how many individual different drivers are available, the individual data points are separated by large amounts of empty space representing theoretically possible road tests for which data has not or can not be collected.

Referring to figure 13 herein, there is illustrated schematically a 3 dimensional data space representing a plurality of individual data points according to different route, driving style and traffic conditions as generated by the specific methods and apparatus herein. Any individual point in the 3 dimensional data space represents an individual speed-time-elevation data file representing a particular route, a particular driving style and a particular traffic condition. For each individual route, since the traffic conditions and driver style are continuously variable within a wide range of parameters, for each individual route, any point representing any combination of traffic conditions and driver style may be obtained synthetically by the process of figure 11 herein. The result is that a wide range of reliably repeatable speed-time-elevation data files are available for running test simulations, which could never have been obtained by running real test drivers over real test routes.

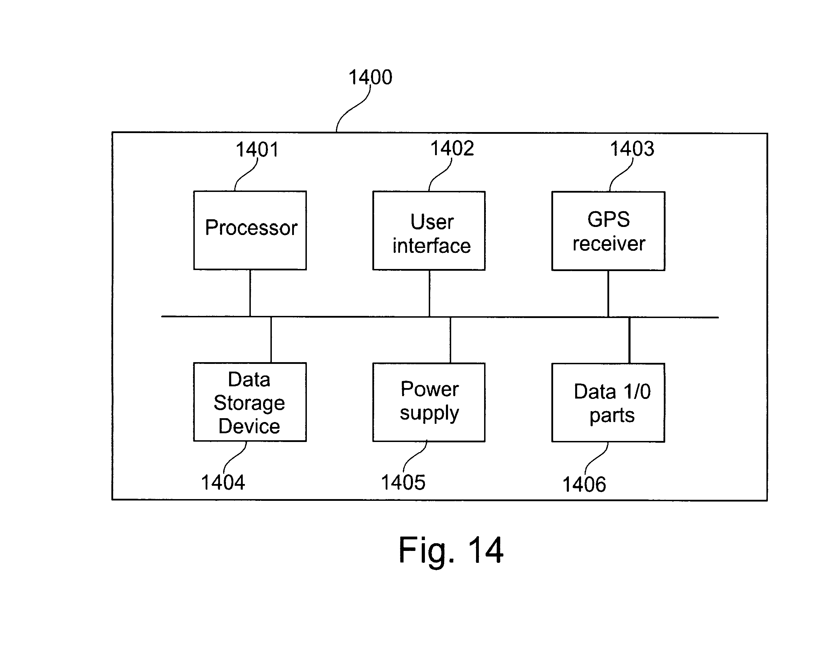

Referring to figure 14 herein, there is illustrated schematically a route data logger also called herein a distance based sequencer, for collecting route data for use in generating speed time profiles for running a simulated test session for either a chassis test, power train test or engine test. The route data logger 1400 comprises a data processor 1401; a user interface 1402 comprising a visual display unit, keyboard, mouse or tracker-ball or the like; a global positioning satellite receiver 1403; one or more data storage devices 1404 for storing collected route data; a power supply 1405 to allow mobile operation of the data logger within a vehicle under road test conditions; and one or more data input/output ports 1406 for uploading or downloading data and programs to the data logger. The device may operate under program control, and based on a known operating system.

The GPS data collection unit may be a stand alone device, or built into the sequencer. Preferably the GPS data collection unit is placed within the vehicle at a place where it has a direct line of sight to the sky, without any metallic items in the ways such as windscreen heat elements. In the best mode, the GPS device utilises an SiRF 3 chipset.

In the engine test rig, the primary loading on the engine is via the drive shaft connecting the engine to the dynamometer, and via the engine mounts to the fixed frame. Therefore the force is applied by and to the dynamometer must replicate the road load profile, being the forces being applied to the engine by virtue of the acceleration and deceleration relationship of the vehicle with the road, forces arising from the power train, in particular the gearbox and clutch.

The result of the load profile and power train model is a set of computer generated instructions to the dynamometer to apply a loading to the engine which replicates the road profile and the power transmission of the vehicle, in accordance with a particular speed time profile.

The speed time profile itself controls one or more actuators which operate the engine controls, principally the throttle and ignition system.

### Overview

The overall test process has main stages including:
1. One time capturing of road data whilst driving a vehicle along a route.
2. Processing of the captured road data to remove any spurious or out layer data.
3. Setting up driver behaviour profile data.
4. Setting up a traffic profile data.
5. Performing multiple simulations of the route using different driver profiles, and/or traffic profiles, optionally with graphic visualisation of the route.
6. Inspecting and analysing the results of the simulation tests on the vehicles, sub assemblies or components.
7. Making engineering modifications to the vehicle, sub assembly or components as a result of the performance of the vehicle, sub assembly or component during the simulated route tests.

The process can be repeated for a range of combinations of different route, different driver profile, different traffic conditions.

### Distanced Based Sequencer

The overall aim of the distance based sequencer shown in figure 14 is to provide a mechanism for a person who is a passenger in a vehicle to record a driven route using a GPS transmitter/receiver attached via a standard or virtual serial port. The GPS can be connected either as serial, USB, or even via Bluetooth.

The basic position information from a GPS receiver is output using a standard MEMA compatible message, and is recorded once per time interval (for example each second) for the duration of a route. With the gathered data, an operator can post-process the data through a set of filters to clean up the recorded route data. Once the data is post-processed, the operator can set up a number of different driver profiles. These driver profiles describe amongst other things how much over or under the speed limit a driver can drive at, how hard a driver will accelerate and brake, how long the driver will wait at junctions, and other driver variable parameters.

The basic GPS data consists of longitude, latitude, altitude and speed. Additionally, the operator inputs during a real test drive, data describing individual items of road furniture such as traffic lights, junctions, stop signs and the like. Since the street furniture is entered during an actual test drive in a vehicle, the human user interface of the sequencer is kept deliberately simple.

The route can then be driven in a real time simulation with a real time graphical output. The real time simulation results in a data file which gives speed and gradient every predetermined time interval (for example 1/16^{th} of a second) over which a journey lasts. This data file can then be used to drive a control test rig, for example a chassis test cell, a power train test or an engine test cell.

During a pre-test of the control data for a real time test simulation, instead of running the route in real time, to save time the route can be run in accelerated time (either with or without an accelerated graphical display) to produce the data file for controlling the test cell.

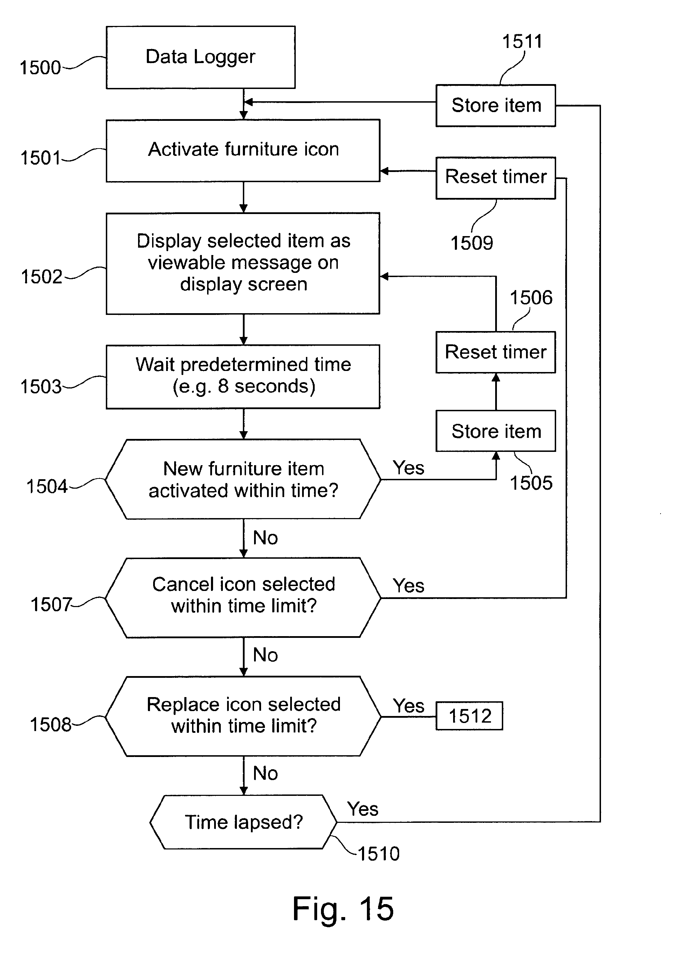

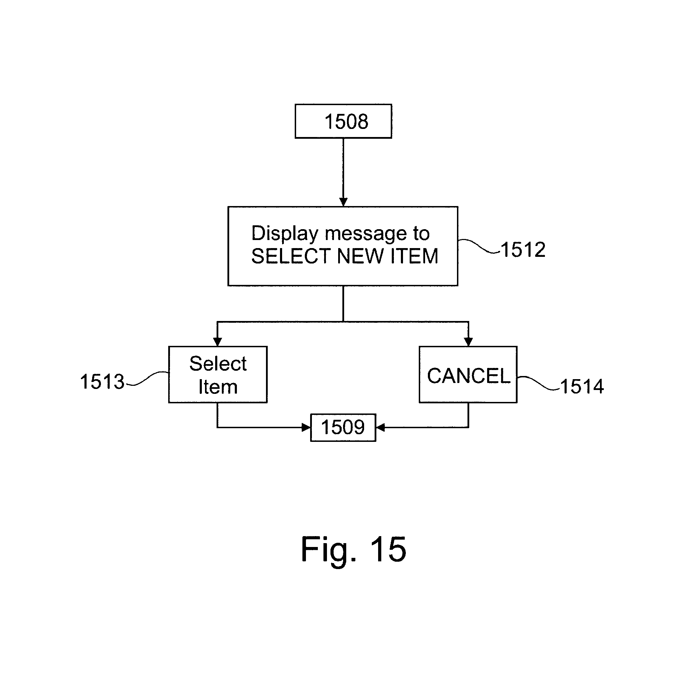

Referring to figure 15 herein, there is illustrated schematically operation of the data logger 1500 for collection of street furniture data in real time. In process 1501, the user activates the furniture icon in real time as the vehicle approaches the item. This is carried out by the user pressing a display furniture icon on the user interface. In process 1502, the data logger displays the selected item as a viewable message on the display screen, which gives the user a visual confirmation that the furniture item is being selected. In process 1503, the data logger waits a predetermined time (in the best mode around 8 seconds), and maintains the display message confirming the selected item during that predetermined time period. In process 1504, if the user activates another furniture icon within the predetermined time, and the original selected furniture item is stored in process 1505, the timer is re-set in process 1506, and a message which displays the other selected furniture item is generated in process 1502.

If the user activates a CANCEL icon within the time limit, then the timer is re-set in process 1509, and the data logger awaits the user activating a new furniture icon in process 1501.

If the predetermined time lapses without any further input from the user in process 1510, then the data logger stores the selected furniture item and awaits the input of a new furniture item selection in process 1501.

If the user selects a REPLACE within the predetermined time limit, then in process 1512, the data logger displays a message indicating that the user should select a new item. The message stays on screen until a new item is selected in process 1513, or until the user selects CANCEL in process 1514. In either case, once the CANCEL is selected or a new item is selected, then the timer re-sets in process 1509.

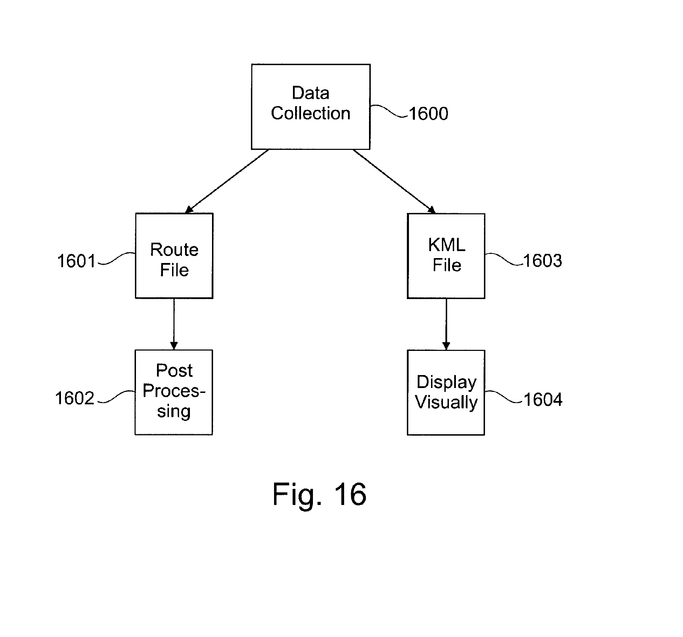

Referring to figure 16 herein, there is illustrated schematically a method of collection and processing of data by the route data logger during a data collection session. In process 1600, data is collected by user input under real time conditions. The collected data is stored in a route file 1601 in real time. The route file may be subject to post-processing of the data in process 1602 either during the data collection process, or as a separate process after a completion of data for a route. In parallel with storage of the data in the route file 1601, the data may also be stored in a KLM file 1603 which can be used to input in to a visual display program 1604 to create a visual display of a route for which data has been collected.

### Capturing a Route

Route capture involves driving a vehicle equipped with a data logger over an intended route to be run.

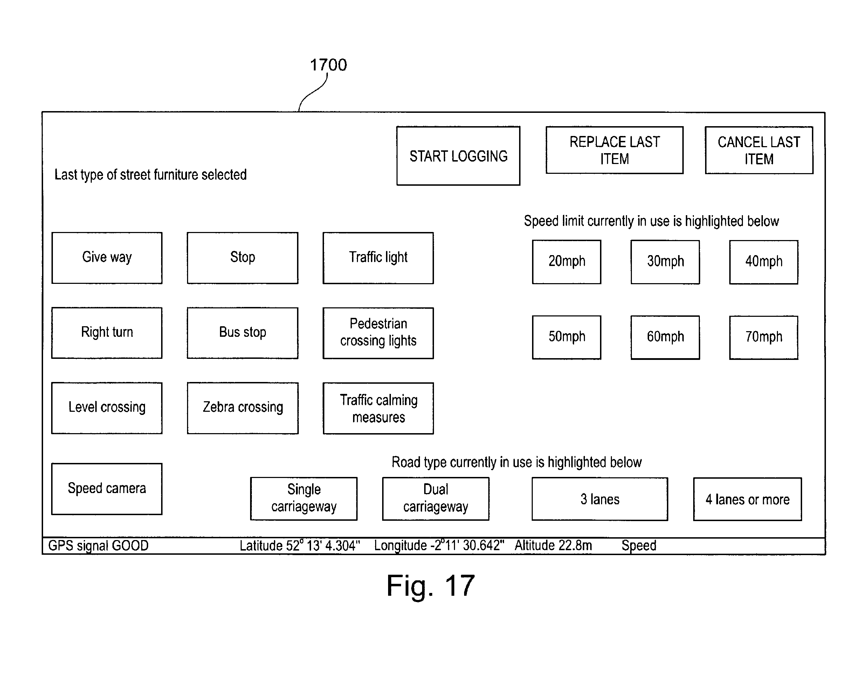

Referring to figure 17 herein, the data logger presents a user interface 1700, which in the best mode comprises a touch sensitive screen capable of touch sensitive data input. The screen comprises touch sensitive inputs for individual parameters selected from the set.
- Type of street furniture encountered.
- Speed limit encountered.
- Number of traffic lanes encountered.

Additionally, there are touch sensitive controls to start a data logging operation, or to cancel an event which has been input, in case the event has been input in error and a control to replace an input event with another event.

Individual input controls are provided for type of street furniture, which may include: give way signs, stop signs, right turns, left turns, bus stops, pedestrian crossing lights, level crossings, zebra crossings (without lights), traffic calming measures, for example speed bumps or restricted width barriers, and speed cameras.

Data input controls for road type include individual controls for: single carriageway; dual carriageway; three lane carriageway; four or more lane carriageway lane. Individual data inputs for speed limits may be pre-set to the most commonly encountered speed limits in the particular country for which the data logger is configured. In the UK, individual speed limit data entry controls may be provided for speed limits of: 20 mph; 30 mph; 40 mph; 50 mph; 60 mph; 70 mph.

### Route Data Collection

A collection of route data occurs by a driver driving a route, and a passenger operative making data inputs to the sequencer in real time. The sequencer continuously receives a GPS signal, and records time from start of journey, latitude, altitude and longitude at regular intervals, for example every 15 seconds, 30 seconds, or other pre-set period. The data logger may calculate the vehicle speed in real time from the GPS data and the time lapsed from start of log-in, or alternatively this data can be calculated retrospectively in a post-processing stage. In a best mode, the speed is calculated in real time within the sequence to allow comparison with the speed shown on the vehicle's speedometer, and a check that the data is being correctly collected, however the recording of speed or its real time calculation from GPS data is not essential, as it is not essential to know or record the vehicle speed when collecting route data.

At the start of a route data collection operation, the vehicle commences a journey from geographical location A.

At the start of the journey, the operator presses a START LOG IN control on the data logger screen. The START LOG IN display changes color from green to red and displays STOP LOG IN. As the route is being driven, the operator presses a data input control whenever an item of road furniture is encountered by the vehicle. If a mistake in data entry is made, the operator can use the REPLACE or CANCEL controls.

Every time a route event is encountered, the operator inputs the event using the sequencer interface 1700. For example when the vehicle encounters a stop sign, the operator presses the STOP input. Similarly, when the vehicle encounters a 30 mph speed limit sign, the operator activates the 30 mph speed limit input. Similar inputs are made for all the other predetermined types of street furniture for which controls are present on the data logging interface 1700. Similarly, when the vehicle encounters a single carriageway, dual carriageway or other type of multi-lane carriageway, the appropriate data input control is activated by the operator. A roundabout is treated as a combination of a give way sign followed by a turn.

Over the course of the journey, a data file is created within the sequencer which captures the street furniture, latitude, longitude and time, describing the route driven.

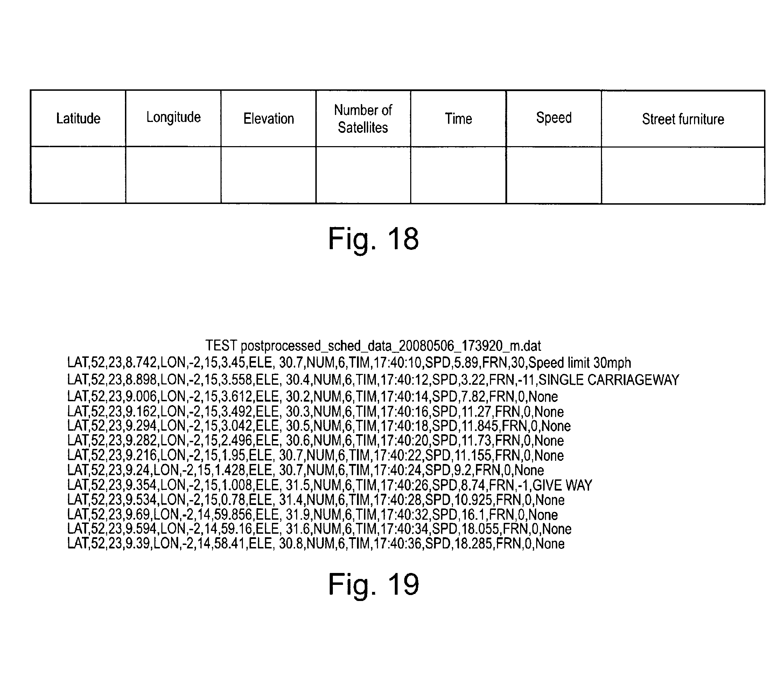

Referring to figure 18 herein, there is illustrated schematically a data file structure for a route data file, to contain data collected by the sequencer of figure 14 herein. The file structure includes data fields for latitude, longitude, elevation, number of satellites in contact with the sequencer, time, speed, and street furniture type.

Referring to figure 19 herein, the data file comprises a list of successive data entries, in this case captured at 2 second intervals during the journey, in which data for latitude, longitude, elevation (altitude), time, vehicle speed, and street furniture encountered are recorded. The route data file comprises a list of rows of data entries ranging from the time that the START LOGGING control is activated to the time the STOP LOGGING control is activated.

### Data Logger Interface Set Up

The interface of the data logger may be configurable for use in different countries. Configuration may be made at the point of manufacture or by a supplier of the equipment, or may be carried out by an end user, and the sequencer configuration menu may be set up accordingly.

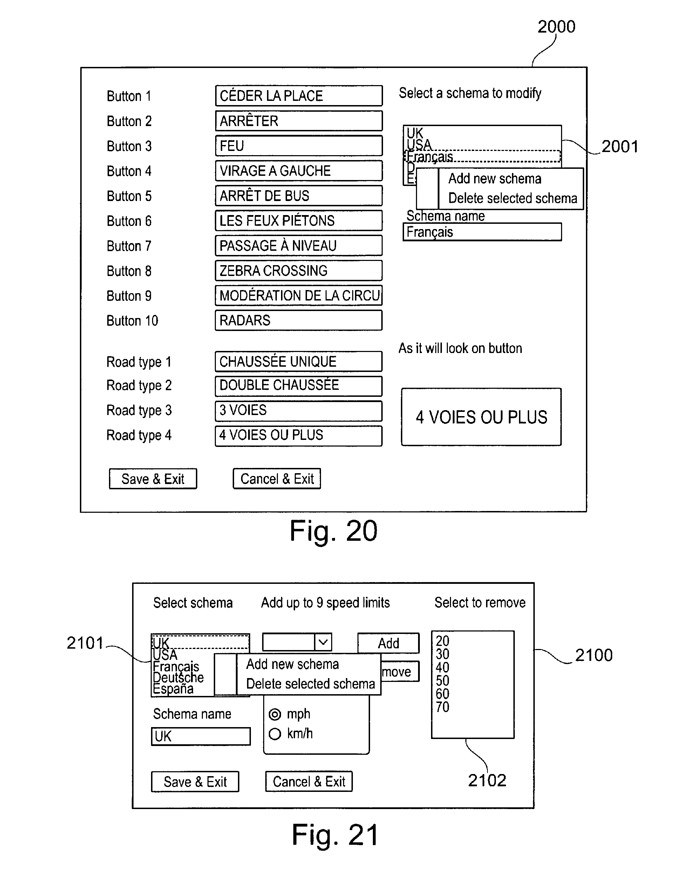

Referring to figure 20 herein, there is illustrated schematically a furniture control set up menu interface 2000 for configuring the data logger interface for different territories. The menu may be presented on the data logger interface itself, or on a separate PC or laptop which can be plugged in to the data logger. The menu comprises a plurality of text boxes corresponding to a plurality of inputs on the data logger screen, and a language selection menu 2001 to select a user language of the data logger. The individual text entries for each type of event are pre-stored in the data logger at point of manufacture. However the actual text is user configurable using the set up screen by typing in a replacement text in the text boxes. This makes the data logger apparatus adaptable for road tests in any country of the world for which text data or (in the case of Japan, China, Korea etc) character information is stored.

The user can reconfigure the names on the road furniture controls for use in different countries. As default, the road furniture control is set to the English language, for use in the United Kingdom or the United States.

Referring to figure 21 herein, there is illustrated schematically a set up interface for entering speed limit data. Speed limits can be set in either miles per hour or in kilometers per hour depending upon the country. The individual values of the most commonly encountered speed limits in those countries can be set. The selected speed limit schema is the one when used for gathering route data in a particular country.

The speed limit set up interface 2100 comprises a country selection menu 2201, speed unit selection menu 2102, and a text box for adding or removing individual speed limit units.

### Checking the GPS Signal

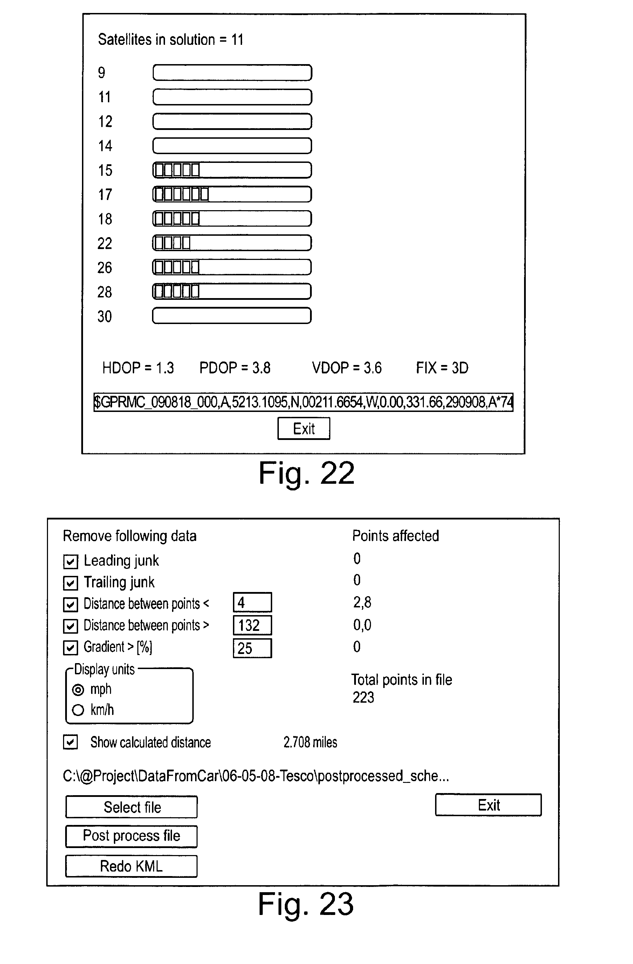

Referring to figure 22, herein, there is illustrated schematically a data logo display for displaying a number of satellites from which a GPS signal is being received by the data logger prior to capturing route data in a real time test drive. The data logger interface comprises a menu option for checking the status of the GPS signal prior to capturing route data. The lower the HDOP, PEOP and VDOP values are, the more accurate the satellite fix will be. Generally, if these values are below a predetermined value (in the specific example being 7), then the captured data will be accurate. Where the FIX parameter is 3D, then altitude data will be reliably available.

### Post Processing of Route Data

Once the road data has been gathered, it may be necessary to post-process it. The reasons for this include:
- At the start and end of the journey there can be multiple readings that may be wandering around as the GPS tries to get a location fix. Spurious outlier GPS readings will need to be disregarded.
- When the vehicle is stationary, for example at traffic lights, multiple GPS readings may be taken which may wander around slightly. Outlier GPS locations are discarded. The GPS altitude data is prone to loss of accuracy if the satellite signal becomes weak. Any spurious or wild jumps in altitude data needs to be smoothed out or discarded if the data is an obvious outlier to prevent the possibility of incorrect data reaching the simulation control system.
- GPS location data which is unfeasibly far apart from the previous reading indicates GPS locking error and can occur when a satellite fix is temporarily lost, for example because of poor signal capture due to high buildings or narrow streets or if the vehicle is creeping along in traffic. GPS data points which are clearly out of consistency with remaining data are removed from the route data file.

Referring to figure 23 herein, there is illustrated schematically a user interface, which allows the user to set parameters for removal of outlier data during a post processing operation. The interface comprises a selection of icons for removing leading junk data, trailing junk data, removal of data points which are below a user selective distance apart; a text box for setting a user selectable distance between data points, below which extraneous data points will be removed; a selection control icon for indicating removal of outlier GPS points which are above a specified distance apart; a text box for specifying the distance in meters between adjacent data points, above which data points are classified as outlier points and are to be removed; a point removal box for removing the points showing a gradient over a predetermined percentage; a text box for setting a percentage of gradient over which points exhibiting that gradient will be removed; and a control to select or deselect whether the calculated distance is shown on the data collection interface.

### Individual Driver Profiles

Once the data has been captured and post-processed, the route can be driven by the computer simulation any number of times using different driver profiles and under different traffic conditions, i.e. traffic density.

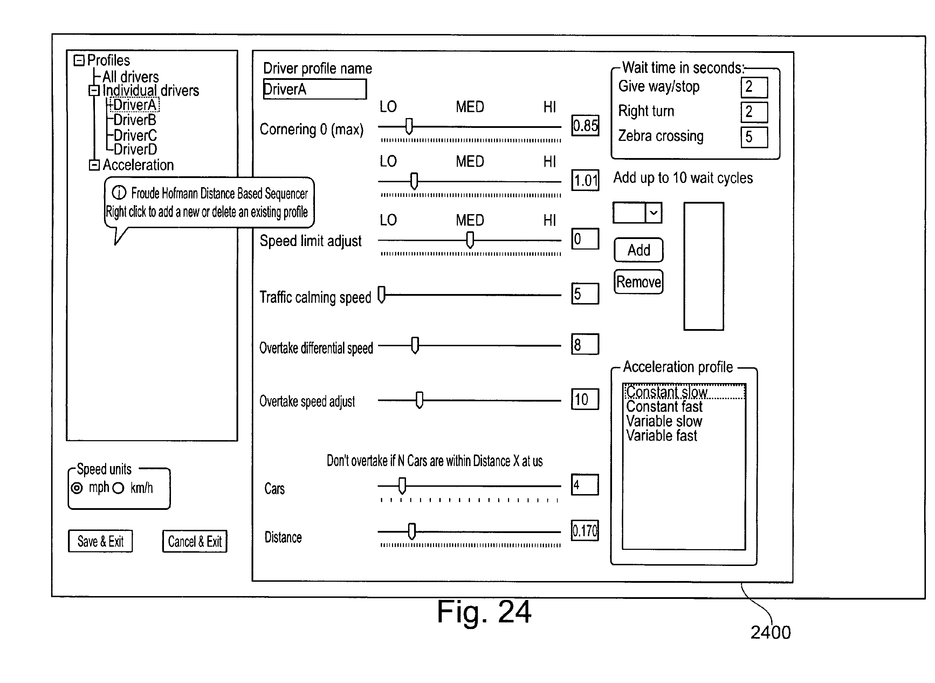

Referring to figure 24 herein, to add in or to create a new driver profile, a driver profile setting interface is provided. The driver profile interface 2400 comprises sliding selection controls for setting parameters between predetermined upper and lower limits for maximum G force; maximum speed; speed limit adjustment time; traffic calming speeds; differential overtaking speeds; and overtake speed adjustment; an overtake parameter comprising (a) a number of adjacent cars within distance X, and (b) the distance X, within which if the specified number of cars are within the specified distance of the driver, the driver will not overtake the vehicle in front.

Additionally, parameters such as the waiting time at give way/stop signs, the waiting time in seconds at a right turn or zebra crossing may be specified, and an acceleration profile of the driver, for example consistently slow, consistently fast, variable slow or variable fast may be selected.

In general, parameters for each synthetic driver profile can be set to include:
1. To drive above, below or at the speed limit.
2. To have a maximum comfortable G force for cornering and braking.
3. To have a preferred speed when driving over traffic calming measures.
4. To have a wait time at give way junctions
5. To have a wait time at right-turn or left-turn junctions.
6. To have a wait time at zebra crossings.
7. To overtake when the maximum possible speed that the car wishes to travel at exceeds the speed of the car in front by a given amount. When overtaking starts, then maximum possible speed of the car can be adjusted upwards. Overtaking will only be performed on a single carriageway when any on-coming vehicles are at a safe distance. Overtaking on any type of carriageway will be performed when a road furniture event is not imminent, but for example within 100 meters.
8. To select up to 10 wait time modifiers. These are % modifiers which are applied to the standard give way wait time. This makes the driver wait for different amounts of time at each give way. If there are more than 10 give ways, then the index in to the buffer may reset to the first item (wait time), and then cycle around again.
9. To select an acceleration profile (one of 50 pre-selected acceleration profiles), which governs how hard the driver accelerates and brakes. In a simulation run, all modeled drivers will obey the same rules at traffic lights, pedestrian lights, zebra crossings and level crossings. In the best mode, for each road item there are 10 cycles. If there are more than 10 of each road item in the route being driven, then the cycle buffer may wrap around to the first cycle again on the 11^{th}, 21^{st} etc successive road items. The number of wait cycles may be either pre-set or may be a user modifiable parameter, to include more or less cycles in a simulation.

### Individual Acceleration Profiles

In a simulation test there can be a plurality of other simulated drivers, each of which can be synthesised to have their own particular driver behaviour. In a test simulation, each of these other drivers on the road effect the progress, acceleration and braking of the vehicle under test, as if the test were on real road conditions with other road users on the road. Each driver profile can be independently created and have its own driver profile.

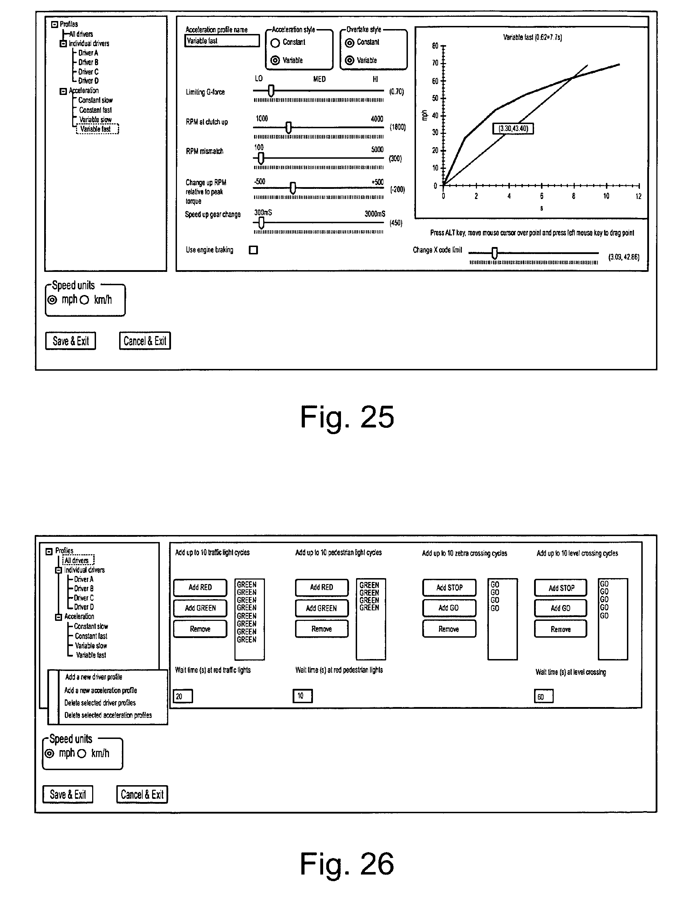

Referring to figure 25 herein, there is illustrated schematically an interface for setting an individual driver profile. The interface comprises controls for setting a constant acceleration style or a variable acceleration, an overtaking style to either a constant overtaking style or a variable overtaking style, a sliding scale for setting and limiting G force; a sliding scale for setting the engine RPM at which the clutch is released on the vehicle; a sliding scale for setting the mismatch in RPM between present engine RPM and RPM as dictated by the gear and road speed; a sliding scale for setting the change up of RPM relative to peak Torque; and a sliding scale to set the quickness of gear change applied by the driver. There is also a selection control for selecting whether the driver users engine breaking or not. A display can show an operator setting up the driver profile a set of pre-set acceleration profiles, for example constant acceleration or variable fast acceleration, and the parameters may be set in MPH or km/h.

Two styles of acceleration profile are provided in the best mode, being:
- Constant - in this case the acceleration is fixed throughout the full range of speed. Using the interface of figure 26, there will only be a single draggable point on the straight-line slope of the graph.
- Variable - in this case the acceleration is variable and in the example shown in figure 17 has 5 separate segments. The acceleration in each segment is governed by the positioning of each of the 5 points on the graph, which are draggable and operator variable. The acceleration will be constant between each set of points.

The acceleration profiles are variable by an operator in order to synthetically create another road user driver in the simulation test by manipulation of the points on the acceleration speed-curve. However pre-set limits are applied such that a user can not set unfeasible or unrealistic acceleration-speed profiles, but rather the range of possible speed profiles are limited to those which are within the performance capabilities of a vehicle, and within normal human driver capabilities.

Other parameters shown in the individual acceleration profile screen are not necessarily used in the simulation, but are put straight through to the robot or actuator system when a drive test simulation is started. The robot system makes its own decisions based upon these values.

### All Drivers Profile

There are some parameters which are set which apply to all virtual drivers within a test simulation.

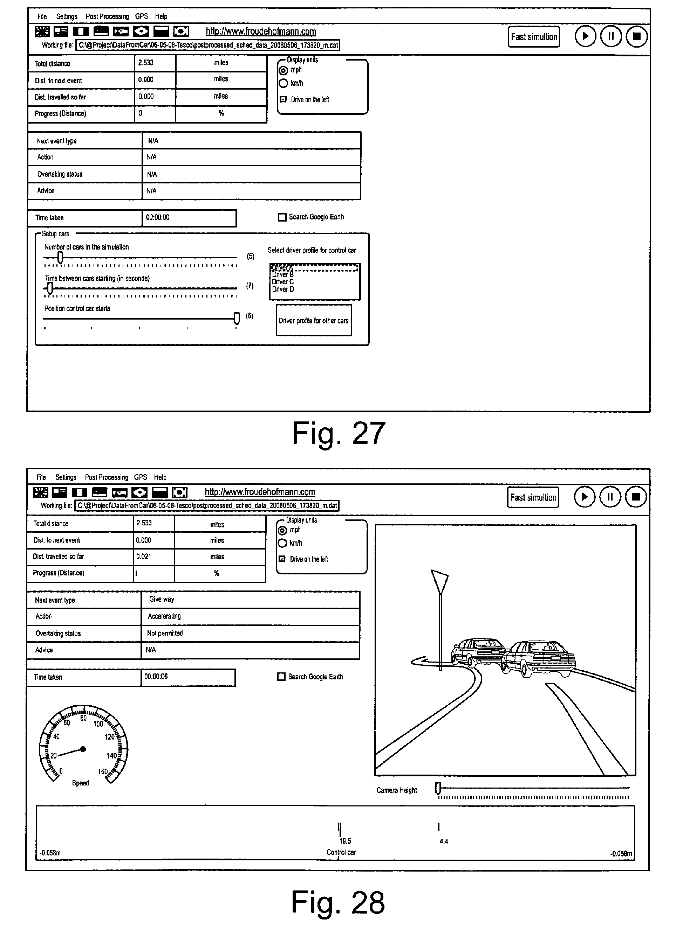

Referring to figure 27, there is illustrated schematically an interface for displaying and setting driver parameters which apply to all drivers within a test simulation.

When a traffic light is reached, all drivers must obey the same rules. Up to 10 different rules may be set in the best mode embodiment, although in other embodiments the number of rules may be expanded or reduced.

The rules include the wait time at a red traffic light, the wait time at a pedestrian light, the wait time at a level crossing, and the wait time at a zebra crossing. In the best mode implementation, all drivers obey the same rules at a level crossing, and all drivers obey the same rules at a zebra crossing, all drivers obey the same rules at a level crossing and all drivers obey the same rules at a traffic light.

However, in other embodiments in order to more accurately simulate real driver behaviour, the system may be modified so that all drivers do not necessarily obey exactly some rules such as speed limits.

### Drive Simulation Set Up

Referring to figure 27 herein, there is illustrated schematically a user interface for monitoring a road test simulation.

When the route data has been captured and post-processed, and the driver profiles have been set up, a route which has been driven in the real world can be driven again in a simulation in real time. During the simulation, all the rules in the driver profile selected will be obeyed.

During simulation, a control file is produced. This file contains the speed and gradient information at 0.125 second intervals. The data in the control file may be used to drive a robot system for operating a vehicle, sub assembly or component.

The simulation may proceed with just one car on the road (the controlled car) or the control car plus a number of other (simulated) cars. The vehicles can be started on a route either at a fixed interval apart, or randomly. The control car can start the simulation at any traffic position within a stream of the other vehicles. Each simulated vehicle may have its own driver profile, all vehicles interact according to the rules laid down in the individual driver profiles. In the best mode implementation, all vehicles travel in the same direction, however in the general case each vehicle can follow its own specific route between its own specific start and end destinations, so all vehicles need not travel the same route. Individual rules may be applied, for example overtaking only permitted on roads that are not single carriageways and overtaking is not permitted within 0.1 miles of an event such as a traffic light or give way sign. However in the general case, each driver may be simulated to follow their own particular driver rules according to their own particular driver profile.

A simulation session can be started by activating the PLAY control. While the route is being simulated, it can be paused or stopped completely.

As a "dry run" simulation prior to applying to an actual test simulation, the route can be simulated in a fast time, i.e. speeded up, prior to applying the test simulation to a real vehicle test.

### Drive Simulation Running

Referring to figure 28 herein, there is illustrated schematically a progress display generated by the sequencer during a simulation of a vehicle driving a route.

The display comprises displays of total route distance, distance to the next event, distance travelled so far, progress (percentage of distance travelled), the next event type, the current action of the car, for example accelerating, braking, the overtaking status either permitted or not permitted, and the time lapsed so far. There is also a road speed indicator, and a synthetic driver view display.

At the lower end of the display, the position of the vehicle relative to other vehicles on the road and relative to upcoming events are displayed.

In the events window, the control car is shown in the centre of the window. Upcoming events are shown to the right of the control car, and previous events or following cars are shown to the left of the control window. In the example shown in figure 28, there are two cars in front of the control car within 100 meters of it, cars which are of the timeline, being too far in front of the control car are not shown each car is labelled by its speed, followed by its identification number in the traffic simulation.

The graphical visual display shows a directional representation of the route being driven in real simulation time.

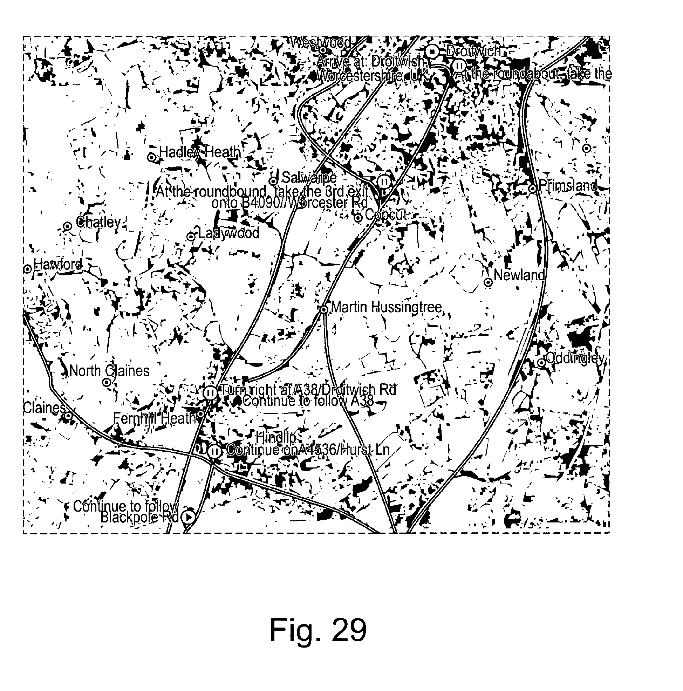

Referring to figure 29 herein, there is illustrated schematically visual display (1604, figure 16) generated from a KML file compiled during a real test drive, from data collected by the data logger.

Whilst in the above described specific embodiments and methods a method of the simulating a road vehicle test has been described, it would be appreciated by the skilled person that the methods and embodiments disclosed herein are adaptable for testing other vehicles, sub-assemblies or other components of vehicles, including boats, ships, aircraft, submarines and the like, with appropriate modification to the route data parameters collected.

## Claims

1. Apparatus for testing a vehicle, a vehicle sub-assembly or a vehicle component, said apparatus comprising:
a test cell apparatus configured for testing said vehicle, sub-assembly or component, said test cell apparatus operable for running a test session in response to a set of computer generated control instructions; and
a computer apparatus configured for controlling said test cell apparatus;
wherein said control instructions are generated from separate data sets comprising;
(a) route data representing at least one route between a plurality of geographical destinations; and
(b) driver control data representing control inputs of at least one individual driver for controlling said vehicle, vehicle sub assembly or vehicle component.

2. The apparatus as claimed in claim 1, wherein said route data and said driver control data are independent of each other; and
said control instructions are generated from a set of traffic data, wherein said traffic data is independent of said route data and said driver control data.

3. The apparatus as claimed in claim 2, wherein said route data, said driver control data, and said traffic data are each variable independently of each other.

4. The apparatus as claimed in any one of the preceding claims, wherein said driver control data comprises a plurality of continuously variable parameters.

5. The apparatus as claimed in any one of the preceding claims, wherein said driver control data has independently controllable parameters selected from the set:
maximum cornering acceleration force;
linear G force, representing vehicle acceleration and deceleration;
a speed limit adjustment parameter representing a time taken to comply with a speed limit;
a traffic calming speed parameter;
an overtake differential speed parameter representing a difference in differential speed between a vehicle under test and a preceding vehicle in front of said vehicle under test, at which a simulated driver will overtake the preceding vehicle;
an overtake speed parameter being the difference in overtaking speed of a vehicle under test and the speed of a simulated vehicle being overtaken, which a driver will apply;
a car proximity parameter representing a number N of cars within a predetermined distance of a driver, which if present will inhibit a simulated driver from overtaking;
a wait time parameter, representing a time for which a driver will wait at an item of road furniture before proceeding;
an acceleration style parameter, representing a driver's variability of acceleration;
an overtaking style parameter representing a driver's variability in overtaking;
a limited G force parameter representing a maximum G force on a vehicle within which a driver will drive;
an engine rpm at clutch-up parameter representing a speed of an engine in revolutions per minute at which a driver will change gear;
an rpm mismatch parameter representing a mismatch measured in engine rpm between engine rpm, and power train rpm at which a driver will change gear;
a change-up relative to peak torque parameter representing a number of engine rpm relative to an engine rpm at which peak torque occurs, at which a driver will change-up gear;
a gear change speed parameter representing a time which it takes a driver to change gear; and
an engine braking parameter representing whether a driver users engine braking or not.

6. The apparatus as claimed in any one of the preceding claims, wherein, route data comprises event data selected from the following set of events:
a traffic flow rule;
a speed limit;
a give-way;
a left turn;
a right turn;
a traffic light;
a bus stop;
a level crossing;
a speed camera;
a single carriageway;
a dual; carriageway;
a multiple lane carriageway.

7. The apparatus as claimed in any one of the preceding claims, wherein said control instructions comprise:
a speed-time profile comprising a set of control instructions to one or more driving robots for driving a vehicle or vehicle sub-assembly along a said route; and
a road load profile comprising a set of control instructions to at least one loading device to load a transmission of said vehicle or sub-assembly thereof according to said route, as driven according to said speed time profile.

8. The apparatus as claimed in claim 7, wherein said control instructions comprise a power train model, said power train model comprising a set of control instructions, generated in response to said road load profile, suitable for controlling said loading device to transmit forces to an engine under test, said forces simulating forces transmitted from a route to a power train and through said power train to said engine.

9. A method of testing a vehicle, a vehicle sub assembly or a vehicle component, said method comprising:
configuring a test cell apparatus for running a test session for testing said vehicle, said sub-assembly, or said component, in response to a set of computer generated instructions; and
controlling said test cell apparatus, in accordance with said set of computer generated instructions;
wherein said control instructions are generated from separate data inputs comprising;
(a) route data representing at least one route between a plurality of geographical destinations; and
(b) driver control data representing control inputs of at least one individual driver for controlling said vehicle, sub assembly or component.

10. The method as claimed in claim 9 herein, wherein said route data and said driver control data are independent of each other; and
said control instructions are generated from a set of traffic data, wherein said traffic data is independent of said route data and said driver control data.

11. The method as claimed in claim 10, wherein said route data comprises event data selected from the following set of events:
traffic flow rules;
speed limits;
give-way rules;
left turns;
right turns;
traffic lights;
bus stops;
level crossings;
give-way signs;
speed cameras;
single carriageways;
dual carriageways;
multiple carriageway lanes.

12. The method as claimed in any one of claims 9 to 11, wherein said control instructions comprise:
a speed-time profile comprising a set of control instructions to one or more driving robots for driving a vehicle, sub-assembly, or component along a said route; and
a road load profile comprising a set of control instructions to at least one loading device to load a transmission of said vehicle or sub-assembly thereof according to said route, as driven according to said speed - time profile.

13. The method as claimed in claim 12, wherein said control instructions further comprise a power train model comprising a computer generated set of control instructions, generated in response to said road load profile, suitable for controlling said loading device to transmit forces to an engine under test, said forces simulating forces transmitted from a route to a power train and through said power train to said engine.

14. A computer program comprising program instructions for testing a vehicle, a vehicle sub-assembly, or a vehicle component, said instructions comprising:
wherein said control instructions derive from separate data inputs in respect of;
route data representing at least one route between a plurality of geographical destinations; and
driver control data representing control inputs of at least one individual driver for controlling said vehicle, sub-assembly, or component.

15. The computer program as claimed in claim 14, wherein said route data and said driver control data are independent of each other; and
said control instructions are generated from a set of traffic data, wherein said traffic data is independent of said route data and said driver control data.

16. The computer program as claimed in claim 14 or 15, wherein said control instructions comprise:
a speed-time profile comprising a set of control instructions to one or more driving robots for driving a vehicle, sub-assembly, or component along a said route; and
a road load profile comprising a set of control instructions to at least one loading device to load a transmission of said vehicle or sub-assembly thereof according to said route, as driven according to said speed - time profile.

17. The computer program as claimed in claim 16, further comprising a power train model comprising a computer generated set of control instructions, generated in response to said road load profile, suitable for controlling said loading device to transmit forces to an engine under test, said forces simulating forces transmitted from a route to a power train and through said power train to said engine.
